# EUROPEAN PATENT APPLICATION

(11) **EP 2 645 222 A1**
(43) Date of publication of application: **02.10.2013**
(21) Application number: 12196677.4
(22) Date of filing: 12.12.2012
(51) Int. Cl.: G06F 3/0488, G06F 3/0485

(54) **Portable electronic apparatus, scroll processing method, and scroll processing program**

(30) Priority: 30.03.2012 JP 2012083277
(71) Applicant: FUJITSU LIMITED, Kawasaki-shi, Kanagawa 211-8588 (JP)
(72) Inventor: Karasudani, Akira, Kanagawa, 211-8588 (JP)
(74) Representative: HOFFMANN EITLE

(57) **Abstract**

A portable terminal (1) includes a display (16) and a touch panel device (18) that detects an operation on a display screen of the display. The portable terminal includes a determining unit (31) that determines whether scroll is enabled within an application screen (41) in a scroll direction corresponding to a scroll operation, when the scroll operation on the application screen in the display screen is detected. The portable terminal further includes an entire scroll unit (33) that scrolls the entire application screen in the scroll direction corresponding to the scroll operation, when the determining unit (32) determines that the scroll is not enabled within the application screen (41).

## Description

### FIELD

The embodiments discussed herein are directed to a portable electronic apparatus, a scroll processing method, and a scroll processing program.

### BACKGROUND

Portable terminals in which a display and a touch panel are integrated have been spread. A user of a portable terminal gives instructions of various commands by touching and operating user interface (UI) components on an operation screen displayed on a display. The UI components are arranged on an operation screen. Examples of the UI components include buttons, radio buttons, check boxes, and text boxes. However, when the user holds the portable terminal with one hand and operates an operation screen with his or her fingers of the hand with which the user holds the portable terminal, in some cases the user is not able to execute an operation without touching a UI component on the operation screen with his or her finger.

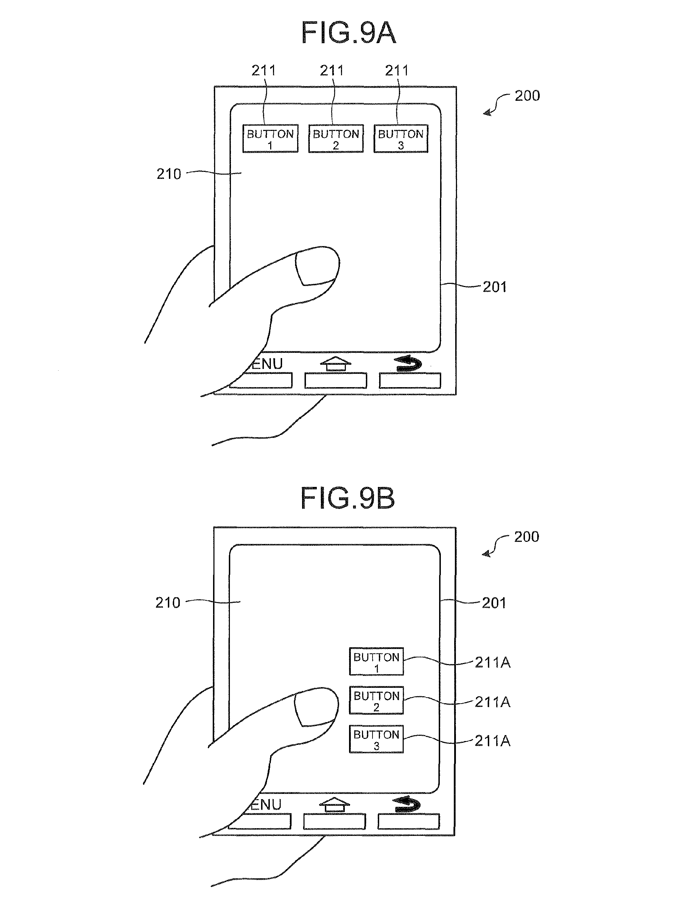

Therefore, in order to cope with such a situation, various methods have been suggested. For example, there is a method of automatically changing the layout of a UI component on an application screen and arranging the UI component within a finger reach range at the operation time. FIG. 9A is a diagram illustrating an example of an application screen of a conventional portable terminal. FIG. 9B is a diagram illustrating an example of the application screen after a change in the layout. Three UI components 211 are arranged on an application screen 210 displayed on a display 201 of a portable terminal 200 illustrated in FIG. 9A. A user instructs the portable terminal 200 to change the layout in response to a predetermined operation. On the application screen 210 of the portable terminal 200 illustrated in FIG. 9B, three UI components 211A are rearranged within the finger reach range in response to the change in the layout. As a result, the UI components 211A on the application screen 210 can be operated by the user.

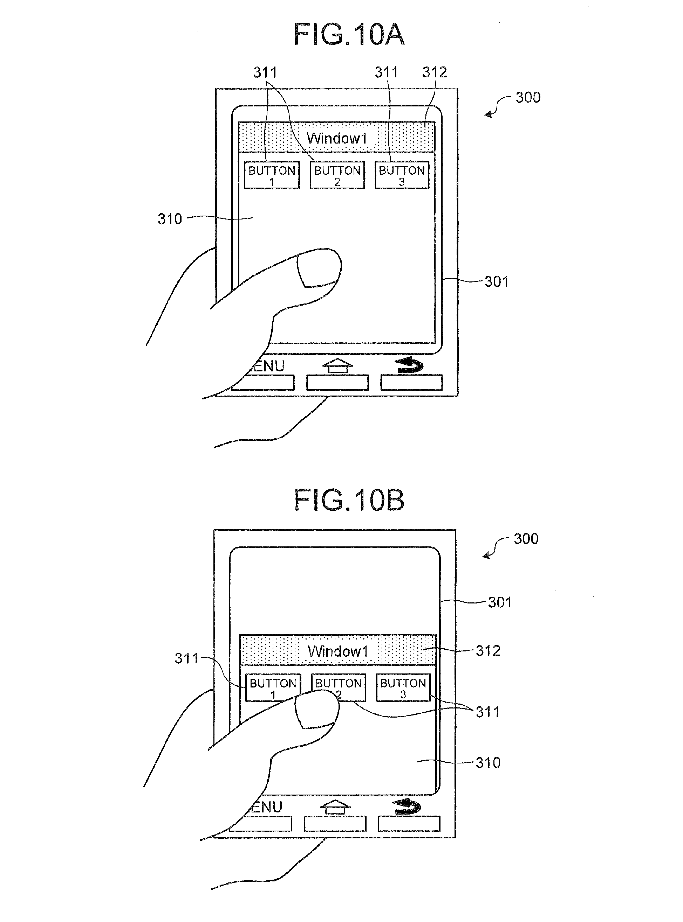

Further, there is a method of mounting a window system on UI components, moving a window, and arranging the UI components within a finger reach range on an application screen. FIG. 10A is a diagram illustrating an example of an application screen of a conventional portable terminal. FIG. 10B is a diagram illustrating an example of an application screen after movement of the window. Three UI components 311 on which a window system is mounted are present on an application screen 310 displayed on a display 301 of a portable terminal 300 illustrated in FIG. 10A. A user designates a title bar 312 of the window on the application screen 310 with his or her finger and moves the window. On the application screen 310 of the portable terminal 300 illustrated in FIG. 10B, the three UI components 311 are moved within the finger reach range. As a result, the user can operate the UI components 311 on the application screen 310.
Patent Literature 1: Japanese Patent No. 4364273
Patent Literature 2: Japanese Laid-open Patent Publication No. 2009-169820
Patent Literature 3: Japanese Laid-open Patent Publication No. 2008-084144
Patent Literature 4: Japanese Laid-open Patent Publication No. 2007-179502
Patent Literature 5: Japanese Laid-open Patent Publication No. 2004-355106
Patent Literature 6: Japanese National Publication of International Patent Application No. 2010-515978
Patent Literature 7: Japanese Laid-open Patent Publication No. 2010-033413

However, in the method of automatically changing the layouts of the UI components 211, the layouts of the UI components 211 on the application screen 210 have to be prepared in advance in accordance with a variation in an operation status. For example, a hand with which the user holds the portable terminal 200 is switched between the right and left hands or the direction of the portable terminal is changed, that is, methods of using the portable terminal 200 are various depending on the status of the user. Accordingly, it is difficult to prepare various layouts of the UI components 211 in consideration of all of the statuses.

In the method of mounting the window system on the UI components 311 and arranging the UI components 311 within the finger reach range in response to the movement of the window, the title bar 312 used to give an instruction to move the window is generally out of the finger reach range. Accordingly, it is difficult to move the window by an operation with one hand. Further, a part of the application screen 310 of the display 301 is hidden behind the moved window after the movement of the window, and thus an operation is not enabled to continue due to occurrence of a non-display region.

Accordingly, it is an object in one aspect of an embodiment of the invention to provide a portable electronic apparatus, a scroll processing method, and a scroll processing program capable of improving operability of an application screen.

### SUMMARY

According to an aspect of the embodiments, a portable electronic apparatus includes: a display; a touch panel that detects an operation on a display screen of the display; a determining unit that determines whether scroll is enabled within an application screen in a scroll direction corresponding to a scroll operation, when the scroll operation on the application screen on the display screen is detected; and an entire scroll unit that scrolls the entire application screen in the scroll direction corresponding to the scroll operation, when the determining unit determines that the scroll is not enabled within the application screen.

### BRIEF DESCRIPTION OF DRAWINGS

FIG. 1 is a diagram illustrating an example of a portable terminal according to a first embodiment;
FIG. 2 is a diagram illustrating an example of a functional configuration of a CPU;
FIG. 3A is a front view illustrating an example of the portable terminal;
FIG. 3B is a diagram illustrating an example of the portable terminal after entire scroll;
FIG. 4A is a diagram illustrating an example of a normal scroll process on an application screen;
FIG. 4B is a diagram illustrating an example of an entire scroll process on the application screen;
FIG. 4C is a diagram illustrating an example of a button operation after the entire scroll of the application screen;
FIG. 4D is a diagram illustrating an example of a returning process on the application screen;
FIG. 5 is a flowchart illustrating an example of a process of a CPU of the portable terminal in regard to the scroll process;
FIG. 6 is a flowchart illustrating an example of a process of the CPU of the portable terminal in regard to the returning process;
FIG. 7 is a front view illustrating an example of a portable terminal according to a second embodiment;
FIG. 8 is a diagram illustrating an electronic apparatus executing a scroll processing program;
FIG. 9A is a diagram illustrating an example of an application screen of a conventional portable terminal;
FIG. 9B is a diagram illustrating an example of an application screen after a change in a layout;
FIG. 10A is a diagram illustrating an example of an application screen of a conventional portable terminal; and
FIG. 10B is a diagram illustrating an example of an application screen after movement of a window.

### DESCRIPTION OF EMBODIMENTS

Preferred embodiments of the present invention will be explained with reference to accompanying drawings. The disclosed technology is not limited to the embodiments. Further, the embodiments to be described below may be combined appropriately within a range in which inconsistency does not occur.

### [a] First Embodiment

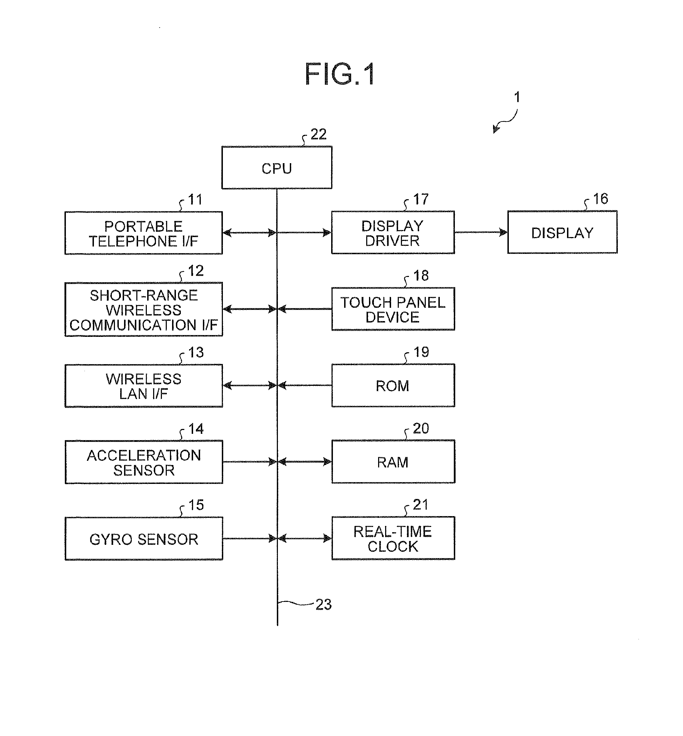

FIG. 1 is a block diagram illustrating an example of a portable terminal 1 according to a first embodiment. The portable terminal 1 illustrated in FIG. 1 is, for example, a portable telephone terminal such as a smart phone that has a touch panel function of detecting a touch operation on a display screen. The portable terminal 1 includes a portable telephone interface (hereinafter, simply referred to as an I/F) 11, a short-range wireless communication I/F 12, a wireless LAN I/F 13, an acceleration sensor 14, and a gyro sensor 15. The portable terminal 1 further includes a display 16, a display driver 17, a touch panel device 18, a read-only memory (ROM) 19, and a random access memory (RAM) 20. The portable terminal 1 further includes a real-time clock 21, a central processor unit (CPU) 22, and a bus 23. The portable telephone I/F 11 is an interface that is in charge of a portable telephone function. The short-range wireless communication I/F 12 is an interface that is in charge of a short-range wireless communication function. The wireless LAN I/F 13 is an interface that is in charge of a wireless LAN function.

The acceleration sensor 14 is, for example, a sensor that detects accelerations of three axes, the x axis, the y axis, and the z axis of the portable terminal 1 itself. The gyro sensor 15 is, for example, a sensor that detects angular velocities of the three axes. The display 16 is a liquid crystal display (LCD) or the like that displays various kinds of information on a screen. The display driver 17 controls driving of the display 16. The touch panel device 18 detects a touch operation on a display screen of the display 16. The touch panel device 18 utilizes, for example, a resistance film type, but may utilize any one of a surface elastic wave type, an infrared type, an electromagnetic induction type, and an electrostatic capacitance type.

The ROM 19 is, for example, a storage unit that stores various programs such as scroll processing programs. The RAM 20 stores various kinds of information. The real-time clock 21 generates a clock to be used by the portable terminal 1. The CPU 22 controls the entire portable terminal 1. The bus 23 connects various units such as the CPU 22 and the RAM 20 inside the portable terminal 1 to each other.

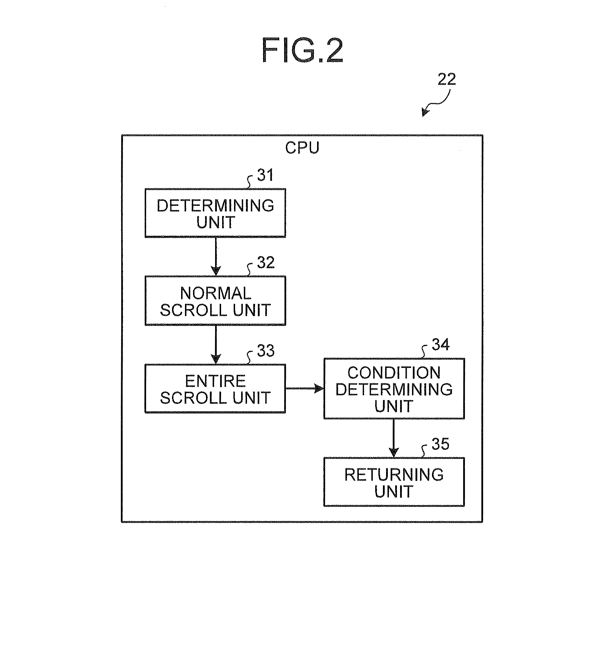

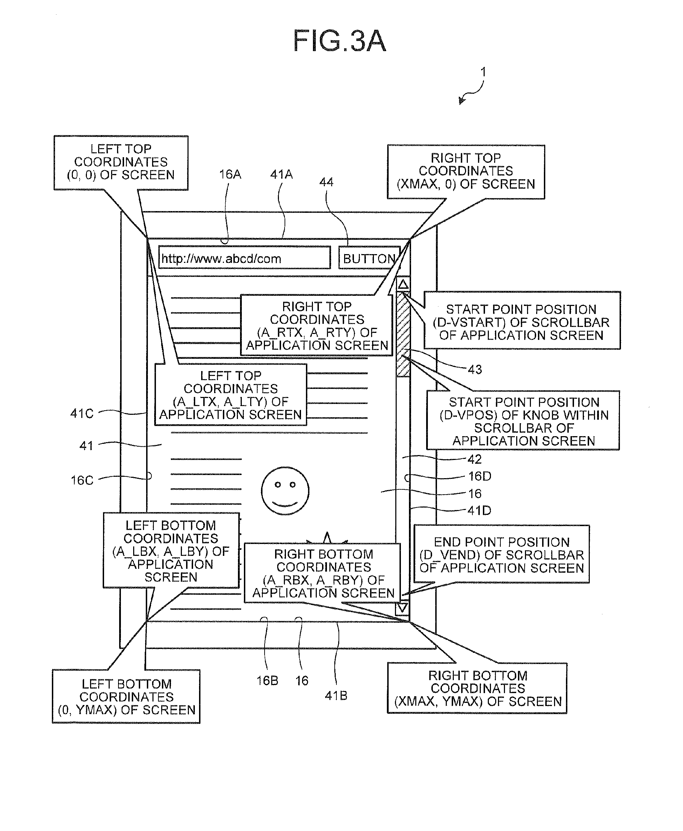

FIG. 2 is a diagram illustrating an example of a functional configuration of the CPU 22. The CPU 22 reads the scroll processing program stored in the ROM 19 and configures various processes as functions in accordance with the read scroll processing program. The CPU 22 illustrated in FIG. 2 includes a determining unit 31, a normal scroll unit 32, an entire scroll unit 33, a condition determining unit 34, and a returning unit 35. FIG. 3A is a front view illustrating an example of the portable terminal 1. The determining unit 31 detects a scroll operation on an application screen 41 on the display screen of the display 16 illustrated in FIG. 3A through the touch panel device 18. Here, the scroll operation is an operation of executing scrolling in a vertical direction, a horizontal direction, or the like on the application screen 41. Examples of the scroll operation include upper scroll (scroll-down) executed in response to a touch operation from the upper side to the lower side on the application screen 41 and lower scroll (scroll-up) executed in response to a touch operation from the lower side to the upper side on the application screen 41. Further, examples of the scroll operation include right scroll executed in response to a touch operation from the right side to the left side on the application screen 41, left scroll executed in response to a touch operation from the left side to the right side on the application screen 41, and inclination scroll executed in response to a touch operation executed in an inclination direction on the application screen 41.

The determining unit 31 determines whether scroll can be executed within the application screen 41 in a scroll direction corresponding to a scroll operation, when the scroll operation is detected within the application screen 41. Further, the determining unit 31 determines whether scroll can be performed on the application screen 41 based on whether the current position of a knob 43 in a scrollbar 42 directing a scroll within the application screen 41 is located at a limitation position. The limitation position of the knob 43 is a position at which when the scrollbar 42 is a vertical scrollbar, the start point of the knob 43 reaches the start point position of the scrollbar 42 and no longer moves upward, and thus the upper scroll is not enabled through normal scroll. The limitation position of the knob 43 is a position at which when the scrollbar 42 is the vertical scrollbar, the end point of the knob 43 reaches the end point position of the scrollbar 42 and no longer moves downward, and thus the lower scroll is not enabled through normal scroll. The limitation position of the knob 43 is, for example, a position at which when the scrollbar 42 is a horizontal scrollbar, the left end of the knob 43 reaches the left end of the scrollbar 42 or a position at which the right end of the knob 43 reaches the right end of the scrollbar 42.

The determining unit 31 determines whether scroll can be executed within the application screen 41 based on whether the scrollbar 42 is located within the application screen 41. Further, the determining unit 31 may determine whether scroll can be executed within the application screen 41 based on whether the scroll is supported in a scroll direction.

When it is determined that scroll can be executed within the application screen 41, the normal scroll unit 32 scrolls the inside of the application screen 41 by a predetermined amount in a scroll direction corresponding to a scroll operation.

When it is determined that scroll is not enabled within the application screen 41, the entire scroll unit 33 executes transition from a normal scroll state to an entire scroll state and scrolls the entire application screen 41 by a predetermined amount in a scroll direction corresponding to a scroll operation. That is, when a scroll operation is detected from a position at which scroll corresponding to a scroll operation within the application screen 41 is not enabled, the entire scroll unit 33 scrolls the entire application screen 41 in a scroll direction corresponding to the scroll operation. Further, when it is determined that scroll is not enabled within the application screen 41, the determining unit 31 stores the application screen 41 in the normal screen state immediately before the transition to the entire scroll state in the RAM 20.

The condition determining unit 34 determines whether a returning condition for returning from the entire scroll state to the normal scroll state is met. The returning condition is, for example, a case in which an operation on an UI component 44 on the application screen 41 is detected. The UI component 44 is a UI component which is arranged on the application screen 41 and a user can operate. Examples of the UI component 44 include a button, a radio button, a check box, a text box, a hyperlink, and a mail address.

The returning condition is, for example, a case in which any operation is not detected continuously for a predetermined time from an scroll operation of the entire scroll. Further, the predetermined time is, for example, five seconds. The returning condition is, for example, a case in which a specific operation on the portable terminal 1 is detected. The specific operation is, for example, an operation when the portable terminal 1 is switched from a vertical type to a horizontal type or when the portable terminal 1 is switched from the horizontal type to the vertical type. The returning condition is, for example, a case in which a returning operation of transitioning to the normal scroll is detected. The returning operation is, for example, an operation of holding down a region other than the UI component 44 of the application screen 41 or a region of the display screen continuously twice after the entire application screen 41 is scrolled or a scroll operation executed in an opposite direction to that of the entire scroll.

When the condition determining unit 34 determines that the returning condition is met, the returning unit 35 returns to the normal scroll state. For example, when an operation on the UI component 44 on the application screen 41 is detected, the returning unit 35 transitions to the normal scroll state after a process corresponding to the operated UI component 44 is executed. When any operation is not detected continuously for a predetermined time from the scroll operation of the entire scroll, for example, the returning unit 35 transitions to the application screen 41 in the normal scroll state immediately before the transition to the entire scroll state with reference to the RAM 20. When a specific operation on the portable terminal 1 is detected, for example, the returning unit 35 switches a display type to a display type corresponding to the specific operation in the normal scroll state immediately before the transition to the entire scroll state and causes the state to transition to the application screen 41 with reference to the RAM 20. When the returning operation is detected, for example, the returning unit 35 causes the state to transition to the application screen 41 in the normal scroll state immediately before the transition to the entire scroll state with reference to the RAM 20.

The portable terminal 1 illustrated in FIG. 3A displays the application screen 41 on the display screen within the display 16. The vertical scrollbar 42 is disposed on the right side of the application screen 41, and the knob 43 moves in the upper and lower directions within the scrollbar 42. The UI component 44 such as a button is disposed on the upper side of the application screen 41. The left top coordinates of the display screen are set to (0, 0), the right top coordinates of the display screen are set to (XMAX, 0), the left bottom coordinates of the display screen are set to (0, YMAX), and the right bottom coordinates of the display screen are set to (XMAX, YMAX). The left top coordinates of the application screen 41 are set to (A_LTX, A_LTY), the right top coordinates of the application screen 41 are set to (A_RTX, A_RTY), the left bottom coordinates of the application screen 41 are set to (A_LBX, A_LBY), and the right bottom coordinates of the application screen 41 are set to (A_RBX, A_RBY). The coordinates of the start point position of the scrollbar 42 within the application screen 41 are set to (D_VSTART) and the coordinates of the end point position of the scrollbar 42 are set to (D_VEND). The coordinates of the start point position of the knob 43 within the scrollbar 42 are set to (D_VPOS).

That is, when the coordinates of the four corners of the application screen 41 are the same as the coordinates of the four corners of the display screen and the start point of the knob 43 is located at the start point of the scrollbar 42, then the following expression can be made: D_VPOS = D_VSTART, the left top coordinates (A_LTX, A_LTY) = (0, 0), the right top coordinates (A_RTX, A_RTY) = (XMAX, 0), the left bottom coordinates (A_LBX, A_LBY) = (0, YMAX), and the right bottom coordinates (A_RBX, A_RBY) = (XMAX, YMAX).

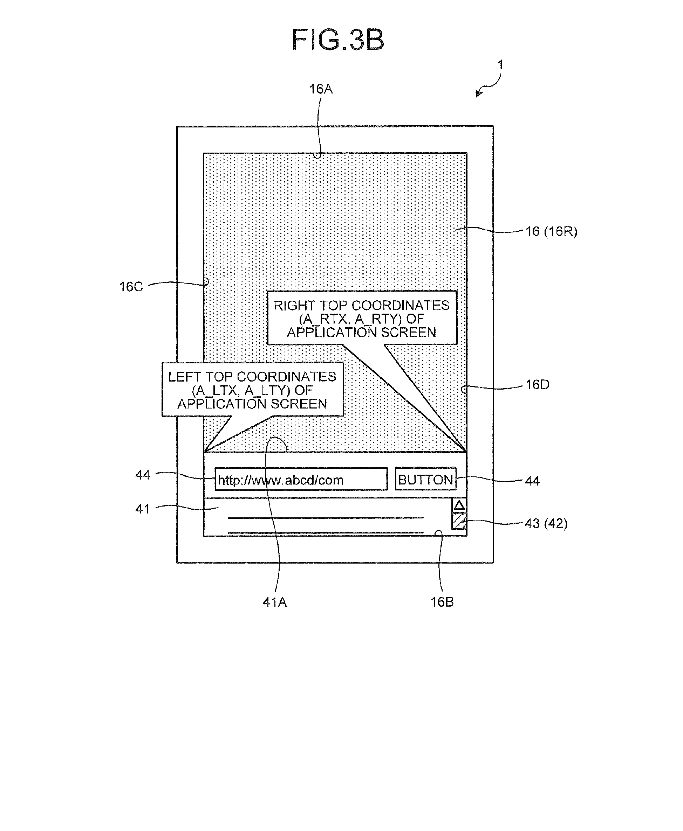

FIG. 3B is a diagram illustrating an example of the portable terminal 1 after the entire scroll. When the start point of the knob 43 is located at the start point of the scrollbar 42 and the application screen 41 moves in the vertical scroll direction by "α", then the following expression can be made: D_VPOS = D_VSTART, the left top coordinates (A_LTX, A_LTY) = (0, α), the right top coordinates (A_RTX, A_RTY) = (XMAX, α), the left bottom coordinates (A_LBX, A_LBY) = (0, YMAX + α), and the right bottom coordinates (A_RBX, A_RBY) = (XMAX, YMAX + α).

That is, the entire scroll unit 33 enables upper scroll of the entire application screen 41 to be executed within a range in which a top side 41A (the right top and left bottom coordinates) of the application screen 41 moves from a top side 16A (the right top and left top coordinates) of the display screen to a bottom side 16B (the right bottom and left bottom coordinates) of the display screen.

The entire scroll unit 33 enables lower scroll of the entire application screen 41 to be executed within a range in which a bottom side 41B (the right bottom and left bottom coordinates) of the application screen 41 moves from the bottom side 16B (the right bottom and left bottom coordinates) of the display screen to the top side 16A (the right top and left top coordinates) of the display screen.

The entire scroll unit 33 enables left scroll of the entire application screen 41 to be executed within a range in which a right side 41D (the right top and right bottom coordinates) of the application screen 41 moves from a right side 16D (the right top and right bottom coordinates) of the display screen to a left side 16C (the left top and left bottom coordinates) of the display screen.

The entire scroll unit 33 enables right scroll of the entire application screen 41 to be executed within a range in which a left side 41C (the left top and left bottom coordinates) of the application screen 41 moves from the left side 16C (the left top and left bottom coordinates) of the display screen to the right side 16D (the right top and right bottom coordinates) of the display screen.

That is, the entire scroll unit 33 enables specific side scroll of the entire application screen 41 to be executed within a range in which a specific side of the application screen 41 moves from a specific side of the display screen to an opposite side opposing the specific side of the display screen.

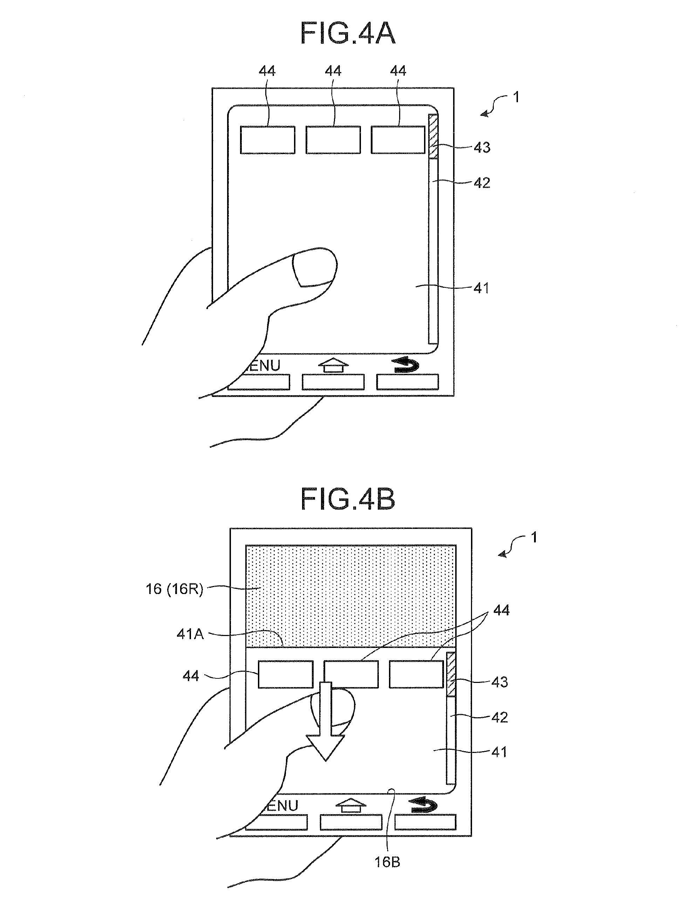

Next, the process of the portable terminal 1 according to the first embodiment will be described. FIG. 4A is a diagram illustrating an example of a normal scroll process of the application screen 41. Since the knob 43 within the vertical scrollbar 42 disposed to the right of the application screen 41 illustrated in FIG. 4A is located at the limitation position at which the start point of the knob 43 reaches the start point of the scrollbar 42, the upper scroll by the normal scroll unit 32 is in a disabled state. Further, the user is not able to touch the UI component 44 disposed in the top portion of the application screen 41 with his or her finger by a one-hand operation. Accordingly, the user executes the upper scroll operation on the application screen 41 at the limitation position of the upper scroll by a touch operation.

FIG. 4B is a diagram illustrating an example of an entire scroll process of the application screen 41. When the upper scroll operation is detected by a touch operation on the application screen 41, the entire application screen 41 is scrolled in the portable terminal 1, as in FIG. 4B. As a result, the user is able to touch the UI component 44 disposed in the top portion of the application screen 41.

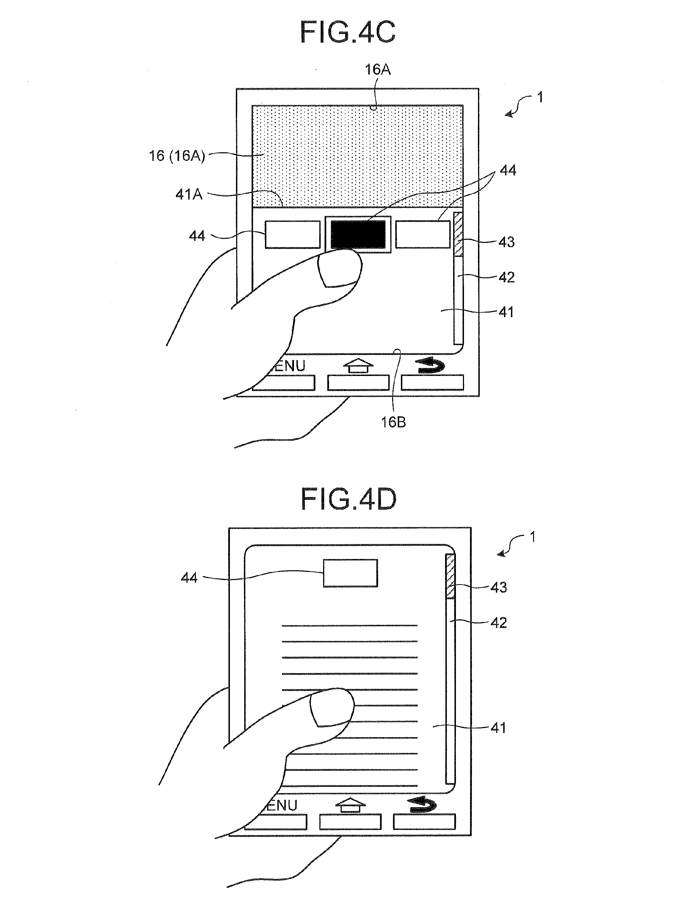

FIG. 4C is a diagram illustrating an example of a button operation after the entire scroll of the application screen 41. As illustrated in FIG. 4C, the user operates the UI component 44 on the application screen 41.

FIG. 4D is a diagram illustrating an example of a returning process of the application screen 41. When a button operation on the UI component 44 within the application screen 41 is detected, the portable terminal 1 switches to the application screen 41 corresponding to the button operation on the UI component 44. At this time, the application screen 41 transitions to a state in which the entire scroll is not enabled in scroll operation but the normal scroll is enabled.

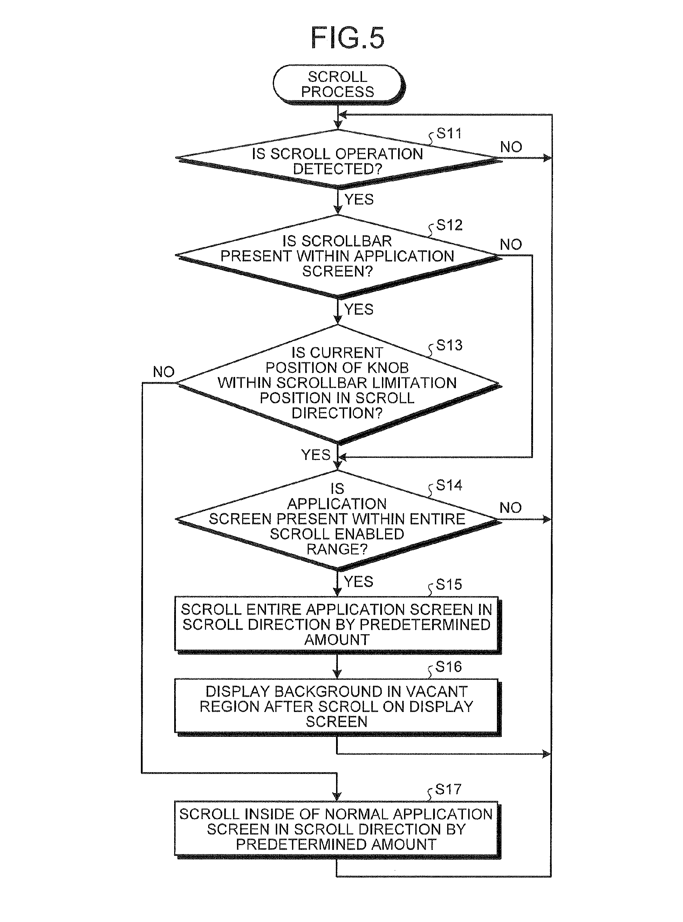

FIG. 5 is a flowchart illustrating an example of the process of the CPU 22 of the portable terminal 1 in regard to the scroll process. A scroll process illustrated in FIG. 5 is a process of executing the normal scroll to scroll within the application screen 41 or the entire scroll to scroll the entire application screen 41. The determining unit 31 of the CPU 22 in FIG. 5 determines whether a scroll operation on the application screen 41 is detected through the touch panel device 18 (step S11). When the scroll operation on the application screen 41 is detected (Yes in step S11), the determining unit 31 determines whether the scrollbar 42 is present within the application screen 41 (step S12).

When the scrollbar 42 is present within the application screen 41 (Yes in step S12), the determining unit 31 determines whether the current position of the knob 43 within the scrollbar 42 is the limitation position corresponding to the scroll direction (step S13). When the current position of the knob 43 is the limitation position (Yes in step S13), the determining unit 31 determines whether the application screen 41 is present within a range in which the entire scroll within the display screen is enabled (step S14). The determining unit 31 determines whether the application screen 41 is present within the entire scroll enabled range in the display screen based on whether a specific side of the application screen 41 is present within a range from a specific side of the display screen to the opposite side to the specific side. For example, when the entire scroll is the upper scroll, the determining unit 31 determines whether the top side 41A of the application screen 41 is present within a range from the top side 16A of the display screen to the bottom side 16B of the display screen. Then, when the top side 41A of the application screen 41 is within the range from the top side 16A of the display screen to the bottom side 16B thereof, the determining unit 31 determines that the application screen 41 is present within the entire scroll enabled range.

When the application screen 41 is present within the entire scroll enabled range (Yes in step S14), the entire scroll unit 33 of the CPU 22 scrolls the entire application screen 41 in a scroll direction (step S15). As a result, the user can move the application screen 41 on the display screen in the scroll direction. After the user scrolls the entire application screen 41 in the scroll direction by a predetermine amount, the entire scroll unit 33 sets a background screen 16R in a vacant region of the display screen after the scroll of the entire application screen 41 (step S16). As a result, the user can recognize that the application screen 41 is not present on the display screen, viewing the background screen 16R. Further, the entire scroll unit 33 sets the background screen 16R based on background screen information stored in the RAM 20. As the background screen information, for example, a display color, pattern, and image contents are stored. Then, the entire scroll unit 33 causes the process to proceed to step S11 to determine whether a scroll operation is detected after setting the background screen 16R.

When the scroll operation on the application screen 41 is not detected (No in step S11), the determining unit 31 causes the process to proceed to step S11. When the scrollbar 42 is not present within the application screen 41 (No in step S12), the determining unit 31 causes to proceed to step S14 to determine whether the application screen 41 is present within the entire scroll enabled range.

When the application screen 41 is not present within the entire scroll enabled range (No in step S14), the determining unit 31 causes the process to proceed to step S11 to determine whether a scroll operation on the application screen 41 is detected.

When the current position of the knob 43 is not the limitation position in the scroll direction (No in step S13), the normal scroll unit 32 of the CPU 22 scrolls the inside of the application screen 41 in the scroll direction (step S17) and causes the process to proceed to step S11.

In the scroll process of FIG. 5, the entire application screen 41 is scrolled, when a scroll operation is detected and when the scrollbar 42 is not present within the application screen 41 and the application screen 41 is present within the entire scroll enabled range. As a result, the user can move the entire application screen 41 on the display screen.

In the scroll process, the entire application screen 41 is scrolled, when the current position of the knob 43 within the scrollbar 42 is the limitation position in the scroll direction and when the application screen 41 is present within the entire scroll enabled range. As a result, the user can move the entire application screen 41 on the display screen.

In the scroll process, the inside of the application screen 41 is scrolled, when the current position of the knob 43 within the scrollbar 42 is not the limitation position. As a result, the user can execute the normal scroll on the inside of the application screen 41 on the display screen.

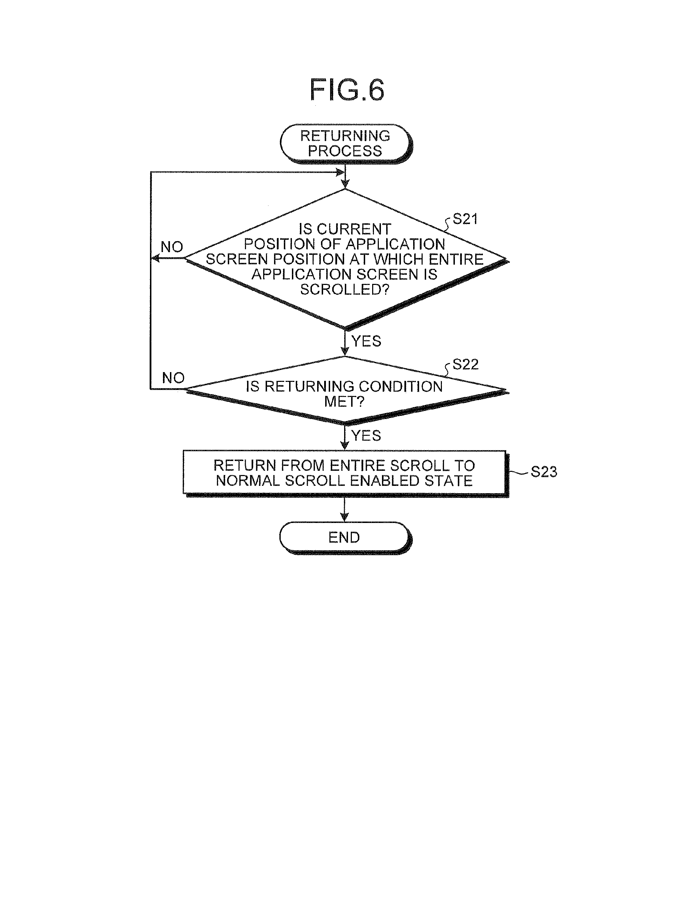

FIG. 6 is a flowchart illustrating an example of the process of the CPU 22 of the portable terminal 1 in regard to the returning process. A returning process illustrated in FIG. 6 is a process of cancelling the entire scroll and transitioning to the normal scroll state, when a returning condition is met in a state in which the entire application screen 41 is scrolled. The condition determining unit 34 of the CPU 22 in FIG. 6 determines whether the application screen 41 is located at a position at which the entire application screen is scrolled, that is, the application screen 41 is in the entire scroll state (step S21). When the application screen 41 is in the entire scroll state (Yes in step S21), the condition determining unit 34 determines whether the returning condition is met (step S22). When the returning condition is met (Yes in step S22), the entire scroll is cancelled and the returning unit 35 of the CPU 22 returns to the normal scroll state (step S23), and then the process illustrated in FIG. 6 ends.

When the application screen 41 is not in the entire scroll state (No in step S21), the condition determining unit 34 causes the process to proceed to step S21 and determines whether the application screen 41 is in the entire scroll state. When the returning condition is not met (No in step S22), the condition determining unit 34 causes the process to proceed to step S21.

In the returning process of FIG. 6, the entire scroll state is cancelled and transitions to the normal scroll enabled state, when the returning condition is met in the entire scroll state. As a result, the continuity of the operation can be ensured, since the user can return the application screen 41 moved through the entire scroll to the application screen 41 in the normal screen enabled state.

In the above-described first embodiment, the CPU 22 determines whether scroll is enabled within the application screen 41 in the scroll direction corresponding to a scroll operation, when the scroll operation on the application screen 41 is detected. Further, when the CPU 22 determines that the scroll is not enabled within the application screen 41, the CPU 22 scrolls the entire application screen 41 in the scroll direction corresponding to the scroll operation. As a result, operability on the application screen 41 is improved, since the user can execute an operation with one hand to move the entire application screen 41 on the display screen and move the UI component 44 in the application screen 41 within a finger reach range.

In the above-described first embodiment, the CPU 22 cancels the entire scroll and causes the state to transition to the normal scroll enabled state, when the returning condition is met in the entire scroll state. As a result, the continuity of an operation can be ensured, since the user does not necessarily execute a work to return from the entire scroll state to the normal scroll enabled state and the application screen 41 returns to the normal scroll enabled state.

In the above-described first embodiment, the entire application screen 41 can be scrolled, when a specific side of the application screen 41 is present within a range from a specific side of the display screen to the opposite side of the display screen. As a result, the user can move the entire application screen 41 within the range from the specific side of the display screen to the opposite side.

In the above-described first embodiment, the CPU 22 determines whether scroll is enabled within the application screen 41 based on whether the knob 43 within the scrollbar 42 is located at the limitation position. As a result, the CPU 22 can simply determine whether the scroll is enabled within the application screen 41.

In the above-described first embodiment, it is determined that the scroll is enabled within the application screen 41, when the knob 43 on the application screen 41 is located at the limitation position. However, it may be determined whether scroll is enabled based on whether a scroll function in a direction corresponding to a scroll operation is supported.

In the above-described first embodiment, it is determined whether a specific side of the application screen 41 is present within the range from a specific side of the display screen to the opposite side to the specific side using the XY coordinates of the display coordinates. However, the determination may be made using only the X coordinate of the display coordinates when the scroll direction is the vertical direction, and using only the Y coordinate of the display coordinates when the scroll direction is the horizontal direction.

In the above-described first embodiment, it is determined whether a specific side of the application screen 41 is present within the entire scroll enabled range. However, it may be determined whether the UI component 44 near a specific side of the application screen 41 is present within the entire scroll enabled range.

### [b] Second Embodiment

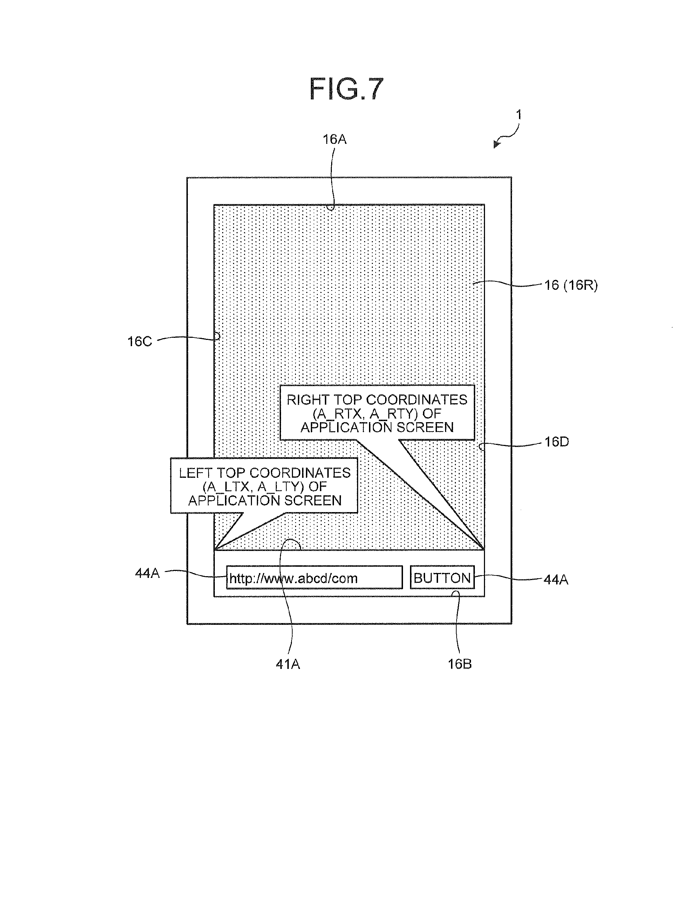

Accordingly, an embodiment of this case will be described below as a second embodiment. The same reference numerals are given to constituent elements having the same configuration as those of the portable terminal 1 illustrated in FIG. 1, and the description of the overlapping configurations and process will not be repeated. FIG. 7 is a front view illustrating an example of a portable terminal 1 according to the second embodiment.

As illustrated in FIG. 7, the entire scroll unit 33 determines whether the display coordinates of a UI component 44A which is disposed on the specific side of the application screen 41 and is operable is present within a range from the display coordinates of a specific side of the display screen to the display coordinates of the opposite side opposing the specific side of the display screen. The UI component 44A on the specific side is the UI component 44A which is the closest to the specific side of the application screen 41. When the UI component 44A on the specific side of the application screen 41 is present within the entire scroll enabled range, the entire scroll unit 33 enables the scroll of the entire application screen 41 to be executed.

That is, the scroll of the entire application screen 41 is enabled, before the specific side of the application screen 41 reaches the opposite side of the display screen, that is, until the display coordinates of the UI component 44A disposed on the specific side of the application screen 41 reach the display coordinates of the opposite side of the display screen.

The entire scroll unit 33 enables the upper scroll of the entire application screen 41 to be executed within the range in which the UI component 44A on the top side 41A of the application screen 41 moves from the top side 16A (the right top and left top coordinates) of the display screen to the bottom side 16B (the right bottom and left bottom coordinates) of the display screen.

The entire scroll unit 33 enables the lower scroll of the entire application screen 41 to be executed within the range in which the UI component 44A on the bottom side 41B of the application screen 41 moves from the bottom side 16B (the right bottom and left bottom coordinates) of the display screen to the top side 16A (the right top and left top coordinates) of the display screen.

The entire scroll unit 33 enables the right scroll of the entire application screen 41 to be executed within the range in which the UI component 44A on the right side 41D of the application screen 41 moves from the right side 16D (the right top and right bottom coordinates) of the display screen to the left side 16C (the left top and left bottom coordinates) of the display screen.

The entire scroll unit 33 enables the right scroll of the entire application screen 41 to be executed within the range in which the UI component 44A on the left side 41C of the application screen 41 moves from the left side 16C (the left top and left bottom coordinates) of the display screen to the right side 16D (the right top and right bottom coordinates) of the display screen.

That is, the entire scroll unit 33 enables the scroll of the entire application screen 41 to be executed within the range in which the UI component 44A on a specific side of the application screen 41 moves from a specific side of the display screen to the opposite side opposing the specific side of the display screen.

In the second embodiment, the scroll of the entire application screen 41 is enabled within the range in which the UI component 44A on a specific side of the application screen 41 moves from a specific side of the display screen to the opposite side. As a result, even when the entire application screen 41 is scrolled at a maximum, the UI component 44A on the specific side can be operated within the application screen 41 in the scroll direction.

In the above-described embodiments, the portable terminal 1 such as a smart phone has been exemplified. However, a portable telephone, a portable game terminal, a tablet terminal, or a portable terminal having no communication function may be used. That is, the embodiments are applicable to a terminal apparatus having a touch panel function on a display screen.

In the above-described embodiments, the normal scroll unit 32 is configured inside the CPU 22. However, the embodiments are applicable to a case in which the normal scroll unit 32 is not configured.

The constituent elements of the units illustrated in the drawings are not necessarily configured physically, as in the drawings. That is, specific forms of distribution or integration of the units are not limited to the illustrated forms, but all or some of the units may be configured a distribution or integration manner functionally or physically in any unit depending on various loads or use states.

All or some of the various processing functions executed by the devices may be executed by a central processing unit (CPU) (or a microcomputer such as a micro-processing unit (MPU) or a micro controller unit (MCU)). Further, all or some of the various processing functions may, of course, be executed on a program analyzed and executed by a CPU (or a microcomputer such as an MPU or an MCU) or hardware configured a wired logic.

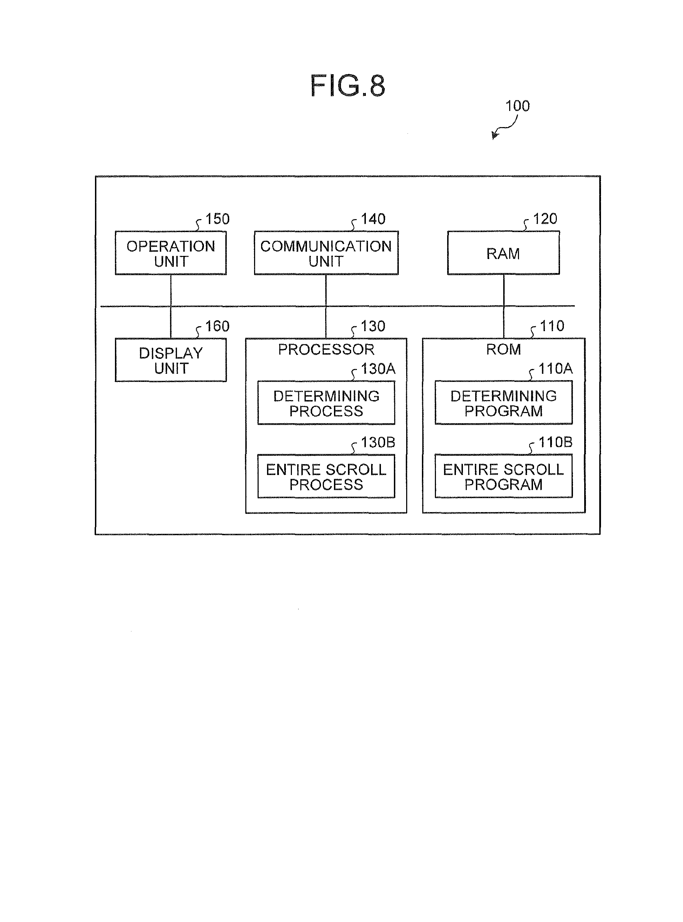

The various processes described in the embodiments can be realized by causing an electronic apparatus to execute a prepared program. Accordingly, an example of the electronic apparatus executing a program having the functions described above in the embodiments will be described below. FIG. 8 is a diagram illustrating an electronic apparatus executing a scroll processing program.

An electronic apparatus 100 executing the scroll processing program and illustrated in FIG. 8 includes a ROM 110, a RAM 120, a processor 130, a communication unit 140, an operation unit 150, and a display unit 160. The operation unit 150 is assumed to have a touch panel function of detecting a touch operation on a display screen of the display unit 160.

The ROM 110 stores the scroll processing program realizing the functions described above in the embodiments in advance. The scroll processing program is not necessarily recorded in the ROM 110, but may be recorded in a recording medium from which a drive (not illustrated) can read the scroll processing program. Examples of the recording medium include a portable recording medium such as a CD-ROM, a DVD disk, a USB memory, or an SD card and a semiconductor memory such as a flash memory. As illustrated in FIG. 8, the scroll processing program includes a determining program 110A and an entire scroll program 110B. The programs 110A and 110B may be appropriately integrated or distributed.

The processor 130 reads the programs 110A and 110B from the ROM 110 and executes the read programs. As illustrated in FIG. 8, the processor 130 causes the programs 110A and 110B to function as a determining process 130A and an entire scroll process 130B, respectively.

When a scroll operation on an application screen in the display screen is detected, the processor 130 determines whether scroll is enabled within the application screen in the scroll direction corresponding to the scroll operation. Further, when it is determined that the scroll is not enabled within the application screen, the processor 130 scrolls the entire application screen in the scroll direction corresponding to the scroll operation. As a result, operability of the application screen is improved.

According to the aspect of the present disclosure, operability of an application screen is designed to be improved.

## Claims

1. A portable electronic apparatus(1) comprising:
a display(16);
a touch panel(18) that detects an operation on a display screen of the display;
a determining unit(31) that determines whether scroll is enabled within an application screen(41) in a scroll direction corresponding to a scroll operation, when the scroll operation on the application screen on the display screen is detected; and
an entire scroll unit(33) that scrolls the entire application screen in the scroll direction corresponding to the scroll operation, when the determining unit determines that the scroll is not enabled within the application screen.

2. The portable electronic apparatus according to claim 1, further comprising:
a condition determining unit(34) that determines whether a returning condition is met in a state in which the entire application screen is scrolled by the entire scroll unit; and
a returning unit(35) that returns to a state previous to the state in which the entire application screen is scrolled, when the condition determining unit determines that the returning condition is met.

3. The portable electronic apparatus according to claim 1 or 2, wherein the entire scroll unit(33) enables scroll of the entire application screen to be executed within a range in which display coordinates of a specific side of the application screen moves from display coordinates of a specific side of the display screen to display coordinates of an opposite side opposing the specific side of the display screen.

4. The portable electronic apparatus according to claim 1 or 2, wherein the entire scroll unit(33) enables scroll of the entire application screen to be executed within a range in which display coordinates of an operation component, which is disposed in a specific side of the application screen and is operable, moves from display coordinates of a specific side of the display screen to display coordinates of an opposite side opposing the specific side of the display screen.

5. The portable electronic apparatus according to claim 4, wherein the operation component is a button, a radio button, a check box, a text box, a hyperlink, or a mail address disposed on the application screen.

6. The portable electronic apparatus according to any one of claims 1 to 5, wherein the determining unit determines whether scroll is enabled within the application screen based on whether there is a normal scroll function of scrolling an inside of the application screen in the scroll direction corresponding to the scroll operation.

7. The portable electronic apparatus according to claim any one of claims 1 to 5, wherein the determining unit determines whether scroll is enabled within the application screen based on whether a knob(43) within a scrollbar(42) directing scroll within the application screen in the scroll direction corresponding to the scroll operation is located at a limitation position.

8. The portable electronic apparatus according to any one of claims 1 to 5, further comprising:
a normal scroll unit(32) that scrolls an inside of the application screen in the scroll direction corresponding to the scroll operation, when the determining unit determines that the scroll is enabled within the application screen.

9. The portable electronic apparatus according to claim 2, wherein the condition determining unit determines that a predetermined condition is met,
when an operation on an operation component(44) operable on the application screen is detected in a state in which the entire application screen is scrolled by the entire scroll unit(33),
when no operation is detected continuously for a predetermined time from the state in which the entire application screen is scrolled by the entire scroll unit,
when a specific operation on the portable electronic apparatus is detected in the state in which the entire application screen is scrolled by the entire scroll unit, or
when a returning operation of returning to the state previous to the state in which the entire application screen is scrolled is detected in the state in which the entire application screen is scrolled by the entire scroll unit.

10. The portable electronic apparatus according to any one of claims 1 to 9, wherein the scroll direction is any one of
an upper direction in which scroll is executed from a top side(16A) of the display screen to a bottom side(16B) thereof,
a lower direction in which the scroll is executed from the bottom side(16B) of the display screen to the top side(16A) thereof,
a right direction in which the scroll is executed from a right side(16D) of the display screen to a left side(16C) thereof,
a left direction in which the scroll is executed from the left side(16C) of the display screen to the right side(16D) thereof,
a right upper direction in which the scroll is executed from a right top side of the display screen to a left bottom side thereof,
a left lower direction in which the scroll is executed from the left bottom side of the display screen to the right top side thereof,
a left upper direction in which the scroll is executed from a left top side of the display screen to a right bottom side thereof, and
a right lower direction in which the scroll is executed from the right bottom side of the display screen to the left top side thereof.

11. A scroll processing method for a portable electronic apparatus(1) including a display(16) and a touch panel(18) that detects an operation on a display screen of the display, the method comprising:
determining whether scroll is enabled within an application screen in a scroll direction corresponding to a scroll operation, when the scroll operation on the application screen on the display screen is detected; and
scrolling the entire application screen in the scroll direction corresponding to the scroll operation, when it is determined that the scroll is not enabled within the application screen.

12. A scroll processing program of a portable electronic apparatus(100) including a display(160), a touch panel(150) that detects an operation on a display screen of the display, and a processor(130), the program causing the processor(22) to perform a process comprising:
determining(130A) whether scroll is enabled within an application screen in a scroll direction corresponding to a scroll operation, when the scroll operation on the application screen on the display screen is detected; and
scrolling(130B) the entire application screen in the scroll direction corresponding to the scroll operation, when it is determined that the scroll is not enabled within the application screen.
